# EUROPEAN PATENT APPLICATION

(11) **EP 3 968 604 A1**
(43) Date of publication of application: **16.03.2022**
(21) Application number: 20196255.2
(22) Date of filing: 15.09.2020
(51) Int. Cl.: H04L 29/08, H04L 29/06

(54) **AN IOT PLATFORM, AN APPARATUS AND METHOD OF OPERATING THE IOT PLATFORM**

(71) Applicant: Siemens Aktiengesellschaft, 80333 München (DE)
(72) Inventor: Ripplinger, Thomas, 76149 Karlsruhe (DE)

(57) **Abstract**

An IoT platform, an Apparatus and Method of Operating the IoT Platform for an industrial plant (150) are disclosed. The cloud based IoT platform (100) includes at least one data store (116). The method comprising receiving data from at least one industrial asset (140, 152, 154) in the industrial plant (150) based on configuration parameters, wherein the data is associated with at least one datapoint (240-248) including at least one metadata (220); storing the data (250) in a buffer store (114) of the IoT platform (100) when an authorization identifier is not linked to the datapoint (240-248); and transferring the data (250) in the buffer store (114) (114) to the data store (116) of the IoT platform (100) when the datapoint (240-248) is validated with the authorization identifier.

## Description

The present invention relates to a cloud based IoT platform, an Apparatus and Method of Operating the cloud based IoT Platform. Particularly, the present invention relates to efficient storage of data from the environment of the Internet of Things (IoT) using the cloud based IoT platform.

In the Internet of Things (IoT), especially with Industrial Internet of Things (IIoT), large data quantities are collected de-centrally from distributed data sources, transferred, and centrally stored in a plurality of different data stores. For example, an industrial plant is the IoT or IIoT environment. An industrial asset such as a field device or gateway device may send data to a cloud based IoT platform. Generally, the steps of onboarding, configuration and workflow setup are required to this end.

When multiple industrial assets are connected to the cloud based IoT platform, each of the industrial assets may be configured to provide data to a common data store in the cloud system. In several occasions, different groups of persons or entities are responsible for the configuration of the industrial assets and for the administration of the cloud based IoT platform. The groups of persons sometimes adhere to different companies, e.g.: an Original Equipment Manufacturer (OEM) delivers and configures the industrial asset which is part of the industrial plant at the end user. The data of the industrial asset may need to be included in the cloud based IoT platform accessible by the end user.

There exist techniques that provide central configuration of the data to be stored using the cloud based IoT platform. However, the method may be a top-down control of the industrial asset that may be infeasible, particularly in case of legacy/outdated industrial assets. Furthermore, the configuration parameters may be rigid and not scalable to different industrial assets.

Another existing technique provides decentral configuration at the industrial asset or the industrial plant. The configuration of the datapoints may not be in line with the desired scheme or may be incorrect. The operators of the industrial asset may need to know and comply with requirements of the cloud based IoT platform.

Yet another existing technique is mapping the data storage and the datapoints. Accordingly, corresponding configuration of the data acquisition and storage is done based on the mapping. The method may require undue efforts for harmonizing and maintenance of the distributed configuration of both the data store and the datapoints. Further, datapoints which are configured in a non-conforming manner may be lost and not be stored in the data store.

Therefore, the method of operating the cloud based IoT platform may benefit from improvements. The object of the present invention is to provide a cloud based IoT platform that enables storage of data from a distributed IoT environment.

In an example, the object of the present invention is achieved by a method of operating a cloud based IoT platform for an industrial plant, wherein the cloud based IoT platform includes at least one data store. The method comprising receiving data from at least one industrial asset in the industrial plant based on configuration parameters, wherein the data is associated with at least one datapoint including at least one metadata; storing the data in a buffer store of the IoT platform when an authorization identifier is not linked to the datapoint; and transferring the data in the buffer store to the data store of the IoT platform when the datapoint is validated with the authorization identifier.

In another example, the object of the invention is achieved by a cloud based IoT platform comprising an IoT administration unit; a buffer store communicatively coupled to the IoT administration unit; and at least one data store communicatively coupled to IoT administration unit and the buffer store, wherein the IoT administration unit is configured to: receive data from at least one industrial asset in the industrial plant based on configuration parameters, wherein the data is associated with at least one datapoint including at least one metadata; enable storing of the data and the metadata in a buffer store of the IoT platform when an authorization identifier is not linked to the datapoint; and transfer the data in the buffer store to the data store of the IoT platform when the datapoint is validated with the authorization identifier.

In yet another example, the object of the present invention is achieved using an apparatus to enable communication between a cloud based IoT platform and an industrial plant. The apparatus comprising a plant administration module configured to receive configuration parameters of at least one datapoint associated with operation of the industrial plant; enable transmission of data from at least one industrial asset in the industrial plant based on the configuration parameters, wherein the data is associated with the datapoint with at least one metadata, wherein the IoT platform is configured to store the data and the metadata in a buffer store of the IoT platform when an authorization identifier is not linked to the datapoint; and transfer the data in the buffer store to the data store of the IoT platform when the datapoint is validated with the authorization identifier.

A further example may include a non-transitory computer readable medium encoded with executable instructions (such as a software component on a storage device) that when executed, causes a computing platform to carry out this described method.

The present invention efficiently enables storage of the data on the at least one data store without restrictive configuration parameters and without any loss of data. Further, the present invention enables controlled inclusion of new datapoints into the cloud based IoT platform while ensuring system/plant-spanning, unified identification of the (IoT) data. In scenarios with differing entities involved with inclusion of new datapoints and management of the cloud based IoT platform, the present invention provides a seamless mechanism to integrate operations performed by respective entities. Accordingly, the present invention achieves the objective of balancing a centrally controlled configuration of datapoints while maintaining flexible remote configuration.

Before describing the suggested convention in more detail, it should be understood that various definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments. It should also be appreciated that features explained in the context of the suggested method may also be comprised by the suggested system by appropriately configuring and adapting the system and vice versa.

As used herein "industrial plant" refers to a facility for manufacture/production/sorting may be semi or completely automated. The industrial plant may be part of an automation environment. For example, manufacturing automation environment, laboratory automation environment, building automation environment and the like. Further, according to the present invention, industrial plant may include a combination of industrial assets such as control devices, sensors, actuators that include a physical device and a digital model that can be used to configure and control the physical device. For example, Computer Numerical Control (CNC) machines, automation systems in an industrial production facility, motors, generators and the like.

As used herein "cloud based IoT platform"/ "IoT platform" or "IIoT platform" refers to a processing/computing environment comprising configurable computing physical and logical resources, for example, networks, servers, data stores, applications, services, etc., and data distributed over the network, for example, the internet. The cloud based IoT platform provides on-demand network access to a shared pool of the configurable computing physical and logical resources. The network is, for example, a wired network, a wireless network, a communication network, or a network formed from any combination of these networks. The cloud based IoT platform is a generic term used to refer one or more centralized cloud computing environments that may be Private Cloud computing environments, Public Cloud computing environments and/or a combination thereof. For the purpose of the present invention a cloud computing environment communicatively coupled to one or more data stores can be also referred to as cloud based IoT platform.

The method includes receiving data from at least one industrial asset in the industrial plant based on configuration parameters, wherein the data is associated with at least one datapoint including at least one metadata. For example, a datapoint *xyz* includes the aforementioned data that is measured and includes the metadata such as name of measuring point, industrial plant, part of plant, industrial asset, criticality, description, type of data, etc. In an example, the datapoint *xyz* may include process data, such as time stamp 1 value 1 quality code 1, time stamp 2 value 2 quality code 2, etc.

In an embodiment, an operator of the industrial plant or industrial asset configures new datapoints including metadata for inclusion to the cloud based IoT platform. The method may include receiving the configuration parameters from the apparatus that enables communication between the industrial plant and the IoT platform. Particularly, the plant administration module is configured to receive the configuration parameters from the operator via a user interface such as a Human Machine Interface (HMI) panel. The plant administration module may be configured to transmit the data from the industrial asset based on the configuration parameters. In an embodiment, the plant administration module may also be referred to as a cloud agent.

In another embodiment, the industrial asset may be configured with an asset administration module that transmits the data from the industrial asset based on the configuration parameters directly to the cloud based IoT platform. In an example, the metadata associated with the datapoint is transmitted once while the process data is transmitted continuously from the industrial asset.

The method may include enabling transmission of the configuration parameters from the plant/asset administration module and validation of the configuration parameters by the IoT administration unit via the IoT platform, wherein the IoT administration unit is not directly accessible by the plant/asset administration module.

The IoT platform advantageously integrates the operations performed by the plant/asset administration module and the IoT administration unit. Therefore, the present invention is advantageous in distributed computing and distributed control environments.

The method includes storing the data in the buffer store. In an example, the metadata may also be stored in the buffer store. The data is stored in the buffer store when the authorization identifier is not linked to the datapoint. Accordingly, the method may include determining the datapoint without the authorization identifier when the configuration parameters of the datapoint do not adhere to configuration rules, wherein the configuration rules are based on completeness of the metadata associated with the datapoint and/or a configuration policy, wherein the configuration policy defines at least one of a naming schema for the metadata and a threshold range for data associated with the industrial plant and/or the industrial asset.

In an embodiment, the configuration policy may be determined using a digital twin or a virtual model of the industrial plant. For example, the digital twin of the industrial plant may be configured with the physical boundary conditions for the data from the industrial plant. Considering a motor as an industrial asset in the industrial plant, the digital twin of the motor includes the physics based rules that provide expected threshold range of vibration data. In a situation where the data does not match the threshold range, the datapoint does not adhere to the configuration policy. Alternatively, there may be an error in the configuration parameters input by the asset operator and these configuration parameters may conflict with expected configuration of the datapoints as indicated by the digital twin.

In another embodiment, the plant/asset operator may not provide complete details for the datapoint. For example, the asset operator may have input only "vibration data" without specifying the source sensor. Such a naming schema may not adhere to the plant wide datapoint configuration schema. In such a scenario the metadata is considered to be incomplete and the configuration rules have not been adhered to.

As indicated hereinabove, the present invention supports implicitly the communication of different user groups, spanning system, plant and company borders. Typically, management of the different user groups is challenging and is a source of errors while storing data on the IoT platform. Accordingly, the present invention reduces efforts for harmonizing and maintenance of the distributed configuration plant/asset administration module and the IoT administration unit.

Further, loss of the data from the industrial asset is avoided in view of the buffer store. Generally, the inclusion of datapoints requires a configuration which is harmonized on plant/asset side (i.e. at the plant/asset administration module) and on cloud side (i.e. at the IoT administration unit). Data points which are configured in a non-conforming manner may not be stored at all. Even if it is stored, the computational effort in reconfiguring the datapoints is challenging. The present invention ensures that the data from the industrial asset is stored permanently from the very beginning, even if the acceptance in the IoT platform is done later.

Accordingly, the cloud based IoT platform may be configured to recognize/determine the datapoints without the authorization identifier. Thereafter, the IoT platform is configured to store the data associated with the datapoints in a clarification zone i.e. the buffer store. Further, a notification may be sent to the IoT administration unit that data authorization required. Furthermore, the IoT platform may be configured to transmit a notification to plant/asset administration module that authorization for the datapoints is pending. The method may accordingly include transmitting a validation request for the authorization identifier to the IoT administration unit of the IoT platform to validate the datapoint.

In an embodiment, the IoT administration unit accepts the datapoint and generates and authorization identifier. In another embodiment, the method may include enabling modification, preferably modifying, the configuration parameters by the IoT administration unit based on the configuration rules; and receiving a validation confirmation for the validation request when the configuration rules are satisfied. Accordingly, the IoT administration unit is configured to modify the configuration parameters and generates the authorization identification for the datapoint.

As a consequence of the datapoint being accepted, the data of these data points received in the future are hence authorized and are directly forwarded to the at least one data store of the IoT platform. Accordingly, the method may include authorizing new data associated with the datapoint to be stored in the data store when the datapoint is validated with the authorization identifier. The IoT administration unit may be configured to transmit an acceptance notification when the datapoint linked with the authorization identifier is validated; and enable storing of new data associated with the datapoint in the data store when the datapoint is validated.

Further, when the datapoint is accepted the data stored in the buffer store can be moved from the clarification zone to the at least one data store of the IoT platform. Accordingly, the method includes transferring the data in the buffer store to the data store of the IoT platform when the datapoint is validated with the authorization identifier.

Through the buffer store and the operations of the IoT administration unit, the IoT platform enables the inclusion of new datapoints in a controlled manner without disturbing a unified plant spanning datapoint configuration.

In another embodiment, the IoT administration unit may be configured to reject the datapoint in response to the validation request. Further, the IoT administration unit may be configured to transmit a rejection notification when an error is identified in at least one of the data, the metadata, the datapoint and the configuration parameters. Accordingly, the method may include receiving a rejection notification from the IoT administration unit for the datapoint when the error is identified in at least one of the data, the metadata, the datapoint and the configuration parameters, wherein the error is identified based on at least one of a manual input and the configuration rules. For example, the manual input may be provided by a cloud operator authorized to operate the IoT platform. The IoT administration unit may be configured with a user interface such as a Graphical User Interface which enables the cloud operator to input rejection of the datapoint.

As a consequence of the datapoint being rejected, the IoT platform is configured to reject new data associated with the datapoint based on the rejection notification. Accordingly, the method may include rejecting new data associated with the datapoint based on the rejection notification. Further, the IoT administration unit is configured to enable rejection of the new data based on the rejection notification.

Further, the method may include transmitting a reconfiguration notification to the plant/asset administration module associated with the industrial plant when the rejection notification is received; and enabling reconfiguration of the configuration parameters whereby the datapoint is validated with the authorization identifier.

The advantage of the IoT administration unit and the operations of acceptance and rejection can be seen in the balance between a top-down approach and a bottom-up approach in configuring new datapoints. The inclusion of new datapoints in the complete system can be controlled centrally while still enabling a flexible remote configuration. Therefore, the present invention enables distributed configuration guidelines/rules for metadata. Furthermore, the present invention ensures that the configuration rules are enforced in distributed environments without rigid operational requirements. Accordingly, the present invention is technically feasible with legacy/outdated assets where the configuration rules can be flexibly updated. Further, the present invention provides a controlled inclusion of new datapoints thereby controlling computation and monetary expense for data storage and management at the IoT platform.

In an embodiment, the present invention has an additional technical effect of enabling determination of consumption of computational resource (at least one data store) of the IoT platform by the industrial asset and the industrial plant. Further, the present invention enables a fine grained analysis of the consumption to the extent ot the resource required per datapoint. The method may include estimating computational resource requirement of the IoT platform for the datapoint based on data stored in the buffer store. In example, a cloud operator may be able to view the data volume per datapoint per time unit (e.g. 30MB/hour). Accordingly, the present invention enable efficient storage of the data from the industrial asset in the IoT platform.

The foregoing has outlined rather broadly the technical features of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiments disclosed as a basis for modifying or designing other structures for carrying out the same purposes of the present disclosure. Those skilled in the art will also realize that such equivalent constructions do not depart from the scope of the disclosure in its broadest form.

Below, the invention is described using the embodiments illustrated in the figures.
- Fig. 1: illustrates a cloud based IoT platform for an industrial plant, according to an embodiment of the present invention;
- Fig. 2: illustrates configuration of datapoints of data from the industrial plant, according to an embodiment of the present invention; and
- Fig. 3: illustrates a flow diagram of an example methodology of operating the IoT platform, according to an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

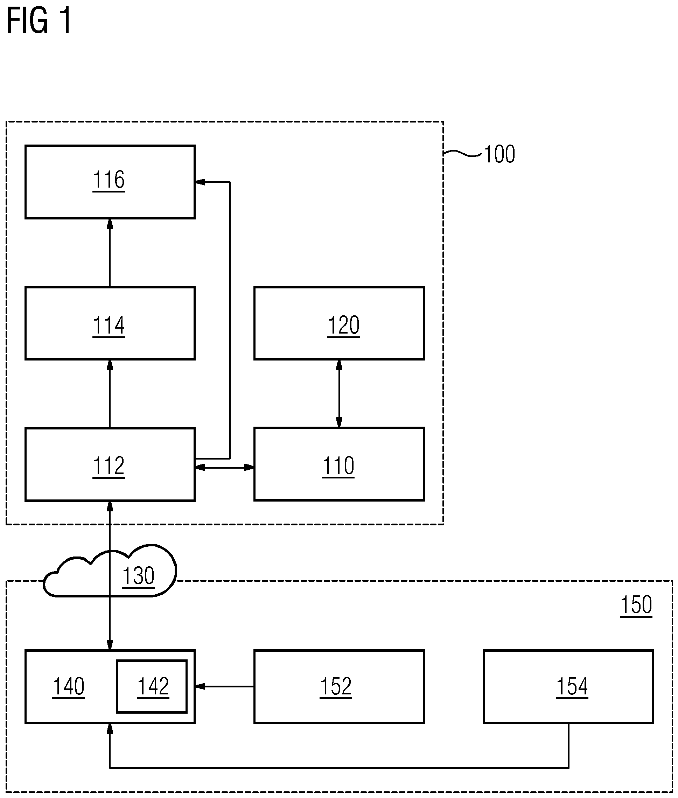

Fig. 1 illustrates a cloud based IoT platform 100 for an industrial plant 150, according to an embodiment of the present invention. The industrial plant 150 includes one or more industrial assets 140, 152 and 154. In an embodiment, the industrial asset 140 is an edge device 140 provided with a plant administration module 142. The industrial assets 152 and 154 may be a combination of controllers, actuators and sensors in the industrial plant 150. The industrial assets 152 and 154 are communicatively coupled with the edge device 140 via an industrial network. The edge device 140 is configured to communicate with the IoT platform 100 via a communication network 130.

The IoT platform 100 comprises an authorization module 122, a buffer store 114 and a data store 116. A person skilled in the art will appreciate that there may be multiple data stores communicatively coupled to the authorization module 122. In an embodiment, the data store 116 may be hosted on a Public Cloud service.

The IoT platform 100 further includes an IoT administration unit 110 and a configuration module 120. In an embodiment, the IoT administration unit 110 may include the configuration module 120. In another embodiment, the IoT administration unit 110 includes the authorization module 122. In the present example, IoT administration unit 110 is communicatively coupled to the configuration module 120. Both the IoT administration unit 110 and the configuration module 120 may be hosted on a Private Cloud service for the industrial plant 150. The data store 116 may also be communicatively coupled to the IoT administration unit 110. In some embodiments, the data stored in the data store 116 is used to execute analytical applications to improve the efficiency of the industrial plant 150. For accurate analysis, loss of data from the industrial plant 150 must be avoided. The IoT platform 100 with the buffer store 114 achieves the purpose.

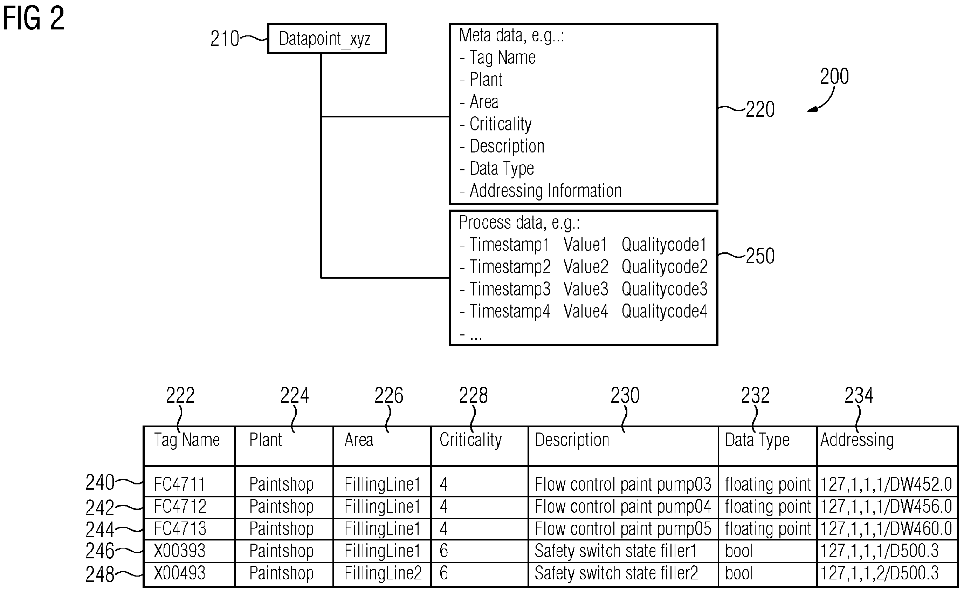

Fig. 2 illustrates configuration of datapoints of data from the industrial plant 150. In Figure 2, the datapoint 210 is configured using the plant administration module 142. In an embodiment, the plant administration module 142 is accessible by a plant operator via a HMI panel in the industrial plant 150 or using a display of the edge device 140. The datapoint 210 includes metadata 220 and process data/measured data/data 250. The metadata 220 may also be referred to as configuration data. The process data 250 is the data recorded or stored in the data store 116.

In an embodiment, the plant operator configures the datapoints based on the tabular column 200. The metadata 220 includes Tag Name 222, Plant 224, Area 226, Criticality 228, Datapoint Description 230, Data type 232 and Addressing 234. In the tabular column 200, each row may refer to a datapoint. Accordingly, the datapoints 240, 242, 244, 246 and 248 may be configured based on the metadata 220. In an example, the plant operator may configure the datapoints 240-248. In another example, different engineers at the industrial plant 150 may configure one or more of the datapoints 240-248 individually.

Based on the configuration of the datapoints 240-248, the industrial assets 152 and 154 initiate transfer of the data 250 to the IoT platform 100, directly or via the edge device 140. The metadata 220 is sent once and process data 250 is sent continuously. The IoT platform 100, particularly the authorization module 122 recognizes new datapoints without authorization identifier. The authorization module 122 is communicatively coupled to the IoT administration unit 110 that is configured to determine the datapoint without the authorization identifier when the configuration parameters of the datapoint do not adhere to configuration rules, wherein the configuration rules are based on completeness of the metadata associated with the datapoint and/or a configuration policy, wherein the configuration policy defines at least one of a naming schema for the metadata and a threshold range for data associated with the industrial plant and/or the industrial asset. Further, the configuration policy is generated by the configuration module 120 that generates the configuration policy based on domain knowledge for the industrial plant 150.

In an embodiment, the domain knowledge of the industrial plant 150 may be captured via a digital twin implemented via knowledge graphs. For example, the digital twin may indicate the criticality range for the datapoints 240-248 to be normal between 3-5. Accordingly, when the datapoints 246 and 248 are configured with criticality 6, the authorization module 122 may determine that the configuration policy is not adhered to.

The IoT administration unit 110 may initiate the storing the data 250 in the buffer store 114, until clarification for the new datapoint is received. Alternatively, the authorization module 122 may initiate the storing of the data 250 in the buffer store 114. In an embodiment, the authorization module 112 transmits a validation request for the authorization identifier to the IoT administration unit 110 to validate the datapoints 240-248. Further, the authorization module 112 transmits a pending notification to the plant administration unit 142 indicating that the datapoints 240-248 are awaiting authorization. The IoT administration unit 110 examines the metadata 220 and adds additional tags, if required. The IoT administration unit 110 further generates the authorization identifier for each of the datapoints 240-248 or refuses the authorization.

If the authorization is accepted by the IoT administration unit 110 the data 250 of the data points 240-248 received in the future are hence authorized and are directly forwarded to the data store 116 of the IoT platform 100. Accordingly, the authorization module 112 is configured to authorize new data associated with the datapoint to be stored in the data store when the datapoint is validated with the authorization identifier. Further, the data of the datapoints 240-248 received previously are moved from the buffer store 114 to the data store 116. The authorization module 112 is configured to transmit a validation confirmation of the authorization acceptance for the datapoints 240-248 to the plant administration module 142.

If the authorization is refused the data of the data240-248 points received previously and in the future are refused. The authorization module 112 is configured to receive a rejection notification from the IoT administration unit 110 for the datapoints 240-248 when an error is identified in at least one of the data, the metadata 240, the datapoint and the configuration parameters, wherein the error is identified based on at least one of a manual input of a domain expert and the configuration rules. The authorization module 112 is further configured to reject new data 250 associated with the datapoints 240-248 based on the rejection notification.

Further, the authorization module 112 is configured to transmit a feedback through a reconfiguration notification to the plant administration module 142 when the rejection notification is received. Also, the authorization module 112 may be configured to enable reconfiguration of the configuration parameters whereby the datapoint is validated with the authorization identifier. Accordingly, the authorization module 112 may be configured to suggest reconfiguration parameters for the datapoints 240-248 based on the error identified. For example, the authorization module 112 may be configured to transmit a reconfiguration notification to be displayed on the HMI accessible by the plant operator with suggestions regarding naming schema or highlighting the error in the metadata 240. Based on the feedback, the plant administration unit 142 is configured to amend the configuration parameters in order to avoid the undecided data transferred to the IoT platform 100.

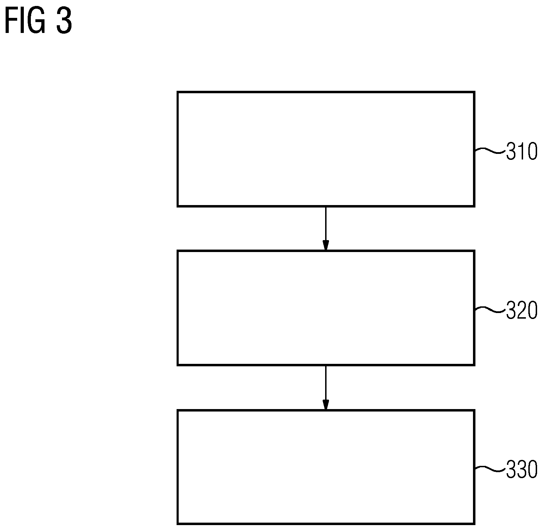

Fig. 3 illustrates a flow diagram of an example methodology of operating the IoT platform, according to an embodiment of the present invention. The method begins at step 310 by receiving data from at least one industrial asset in the industrial plant based on configuration parameters, wherein the data is associated with at least one datapoint including at least one metadata.

At step 320, the data is stored in a buffer store of the IoT platform when an authorization identifier is not linked to the datapoint. Accordingly, step 320 may include determining the datapoint without the authorization identifier when the configuration parameters of the datapoint do not adhere to configuration rules. The configuration rules are based on completeness of the metadata associated with the datapoint and/or a configuration policy, wherein the configuration policy defines at least one of a naming schema for the metadata and a threshold range for data associated with the industrial plant and/or the industrial asset.

Step 320 may also include transmitting a validation request for the authorization identifier to an IoT administration unit of the IoT platform to validate the datapoint. Further, at step 320 the configuration parameters are modified and validated by the IoT administration unit based on the configuration rules. A validation confirmation for the validation request is received thereafter when the configuration rules are satisfied.

At step 330, the data in the buffer store is transmitted to the data store of the IoT platform when the datapoint is validated with the authorization identifier. Further, new data associated with the datapoint is authorized to be stored in the data store when the datapoint is validated with the authorization identifier.

In addition, at step 330 the datapoint may also be rejected. Accordingly, step 330 may include receiving a rejection notification from the IoT administration unit for the datapoint when an error is identified in at least one of the data, the metadata, the datapoint and the configuration parameters, wherein the error is identified based on at least one of a manual input and the configuration rules. Further, step 330 includes rejecting new data associated with the datapoint based on the rejection notification.

In an embodiment, step 330 may also include transmitting a reconfiguration notification to a plant administration module associated with the industrial plant when the rejection notification is received. In addition, step 330 includes enabling reconfiguration of the configuration parameters whereby the datapoint is validated with the authorization identifier.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

## Claims

1. A method of operating a cloud based IoT platform (100) for an industrial plant (150), wherein the cloud based IoT platform (100) includes at least one data store (116), the method comprising:
receiving data from at least one industrial asset (140, 152, 154) in the industrial plant (150) based on configuration parameters, wherein the data is associated with at least one datapoint (240-248) including at least one metadata (220);
storing the data (250) in a buffer store (114) of the IoT platform (100) when an authorization identifier is not linked to the datapoint (240-248); and
transferring the data (250) in the buffer store (114) (114) to the data store (116) of the IoT platform (100) when the datapoint (240-248) is validated with the authorization identifier.

2. The method according to claim 1, further comprising:
determining the datapoint (240-248) without the authorization identifier when the configuration parameters of the datapoint (240-248) do not adhere to configuration rules, wherein the configuration rules are based on completeness of the metadata (220) associated with the datapoint (240-248) and/or a configuration policy, wherein the configuration policy defines at least one of a naming schema for the metadata (220) and a threshold range for data associated with the industrial plant (150) and/or the industrial asset (140, 152, 154).

3. The method according to one of claim 1 and claim 2, further comprising:
transmitting a validation request for the authorization identifier to an IoT administration unit of the IoT platform (100) to validate the datapoint (240-248).

4. The method according to one of the preceding claims, further comprising:
enabling modification, preferably modifying, the configuration parameters by the IoT administration unit based on the configuration rules; and
receiving a validation confirmation for the validation request when the configuration rules are satisfied.

5. The method according to one of the preceding claims, further comprising:
authorizing new data associated with the datapoint (240-248) to be stored in the data store (116) when the datapoint (240-248) is validated with the authorization identifier.

6. The method according to one of the preceding claims, further comprising:
receiving a rejection notification from the IoT administration unit for the datapoint (240-248) when an error is identified in at least one of the data, the metadata (220), the datapoint (240-248) and the configuration parameters, wherein the error is identified based on at least one of a manual input and the configuration rules; and
rejecting new data associated with the datapoint (240-248) based on the rejection notification.

7. The method according to one of the preceding claims, further comprising:
transmitting a reconfiguration notification to a plant administration module associated with the industrial plant (150) when the rejection notification is received; and
enabling reconfiguration of the configuration parameters whereby the datapoint (240-248) is validated with the authorization identifier.

8. The method according to one of the preceding claims, further comprising:
enabling transmission of the configuration parameters from the plant administration module and validation of the configuration parameters by the IoT administration unit via the IoT platform (100), wherein the IoT administration unit is not directly accessible by the plant administration module.

9. A cloud based IoT platform (100) comprising:
an IoT administration unit;
a buffer store (114) communicatively coupled to the IoT administration unit; and
at least one data store (116) communicatively coupled to IoT administration unit and the buffer store (114),
wherein the IoT administration unit is configured to:
receive data from at least one industrial asset (140, 152, 154) in the industrial plant (150) based on configuration parameters, wherein the data (250) is associated with at least one datapoint (240-248) including at least one metadata (220);
enable storing of the data (250)and the metadata (220) in a buffer store (114) of the IoT platform (100) when an authorization identifier is not linked to the datapoint (240-248); and
transfer the data (250) in the buffer store (114) to the data store (116) of the IoT platform (100) when the datapoint (240-248) is validated with the authorization identifier.

10. The cloud platform according to claim 9, wherein the IoT administration unit is further configured to:
determine the datapoint (240-248) without the authorization identifier when the configuration parameters of the datapoint (240-248) do not adhere to configuration rules, wherein the configuration rules are based on completeness of the metadata (220) associated with the datapoint (240-248) and/or a configuration policy, wherein the configuration policy defines at least one of a naming schema for the metadata (220) and a threshold range for data associated with the industrial plant (150) and/or the industrial asset (140, 152, 154).

11. The cloud platform according to one of claim 9 and 10, wherein the IoT administration unit is further configured to:
transmit a rejection notification when an error is identified in at least one of the data, the metadata (220), the datapoint (240-248) and the configuration parameters, wherein the error is identified based on at least one of a manual input and the configuration rules; and
enable rejection of the new data associated with the datapoint (240-248) based on the rejection notification.

12. The cloud platform according to one of claim 9 and 10, wherein the IoT administration unit is further configured to:
transmit an acceptance notification when the datapoint (240-248) linked with the authorization identifier is validated; and
enable storing of new data associated with the datapoint (240-248) in the data store (116) when the datapoint (240-248) is validated.

13. An apparatus to enable communication between a cloud based IoT platform (100) and an industrial plant (150), the apparatus comprising:
a plant administration module configured to:
receive configuration parameters of at least one datapoint (240-248) associated with operation of the industrial plant (150);
enable transmission of data from at least one industrial asset (140, 152, 154) in the industrial plant (150) based on the configuration parameters, wherein the data (250) is associated with the datapoint (240-248) including at least one metadata (220), wherein the IoT platform (100) is configured to:
store the data (250) and the metadata (220) in a buffer store (114) of the IoT platform (100) when an authorization identifier is not linked to the datapoint (240-248); and
transfer the data (250)in the buffer store (114) to the data store (116) of the IoT platform (100) when the datapoint (240-248) is validated with the authorization identifier.

14. A computer-program product, having machine-readable instructions stored therein, that when executed by a computing platform according one of claims 9 to 11 cause the computing platform to perform method steps according to any of the claims 1-8.
